# EUROPEAN PATENT APPLICATION

(11) **EP 2 202 972 A2**
(43) Date of publication of application: **30.06.2010**
(21) Application number: 10159616.1
(22) Date of filing: 19.12.1997
(51) Int. Cl.: H04N 7/16

(54) **System and method for delivering data over a data broadcasting system to specially targeted audiences**

(30) Priority: 20.12.1996 US 770936
(62) Divisional of application: 97954584.5
(71) Applicant: IRDETO B.V., 2132 LS Hoofddorp (NL)
(72) Inventor: Rao, Padmanabha, R., Milpitas, CA 95035 (US)
(74) Representative: van Looijengoed, Ferry Antoin Theodorus

(57) **Abstract**

A method and apparatus are disclosed for providing data over data broadcasting systems to specially targeted audiences. In accordance with the invention, user classifications may be obtained for a plurality of data users. The classifications for a predetermined data content may also be obtained. Once the user and programming content classifications are obtained, the predetermined data content, the regular data content, and a mapping means are transmitted to multiple user reception units over separate transmission services. The mapping means indicates when the individual reception units are to switch automatically to the predetermined data content from the regular data content, and may be configured in accordance with the user classifications and the predetermined data content classifications so that each user obtains and is presented with the predetermined programming content that substantially matches that user's classifications.

## Description

### BACKGROUND OF THE INVENTION

### Technical Field

The present invention relates to the transmission and presentation of data over a data broadcasting system. More particularly, the present invention relates to a method and apparatus for tailoring the delivery of specific data over a data broadcasting system to specially targeted audiences.

### Discussion of the Related Art

As society has expanded in size, both numerically and geographically, and has become more technologically advanced, it has become increasingly necessary to efficiently transmit and present large amounts of data and information to a wide audience. One illustrative area in which this need has become particularly acute is in television programming.

Television viewing is a popular activity, and television programming is delivered to viewers in various forms and via various broadcasting methods, such as cable, telephone, multichannel microwave distribution systems (MMDS), and over-the-air broadcasting - collectively termed terrestrial broadcasting methods - as well as satellite. Satellite broadcasting differs from other transmission methods in many ways, one of which is that satellite signals reach a far larger geographical area than programming signals originating from, for example, a local cable television system operator or broadcast station. Accordingly, while a local cable operator may provide television service to one relatively small community, satellite television system operators generally provide services to entire geographical regions.

Although these broadcasting methods allow television program providers, and data providers in general, to reach a large audience through a single data transmission, there are disadvantages associated with the use of such methods. One disadvantage of terrestrial broadcasting methods is that although television programming and other data can be targeted to particular audiences delineated by local geography, audiences may not be targeted by, for example, their ethnic backgrounds or viewing preferences. Satellite broadcasting is even more disadvantageous in this respect, as television programming and other data cannot be targeted to particular audiences delineated by any means, as the bandwidth necessary for targeting even by local geography would be cost prohibitive utilizing satellite transmissions.

These disadvantages are readily recognized in the area of television advertising. Utilizing terrestrial television broadcasting systems, an advertiser can only restrict its advertisements via television to its local operating area.

Utilizing satellite broadcasting, that same advertiser is even more inhibited, as the finest granularity heretofore efficiently available to satellite advertisers was a single large metropolitan area, such as New York City. Thus, as the television viewing audience expands both in number and geographically, advertisers wishing to reach specially targeted audiences find themselves unable to target only the desired viewers. Without a method to target advertising to selected audiences, advertisers desiring any level of granularity are limited to the use of local broadcasting and other terrestrial systems to reach local geographic audiences.

An additional obstacle to the efficient, practical use of television broadcasting systems, and data broadcasting systems in general, is that certain data, such as advertisement programming, may require a higher bandwidth, or higher data transmission rate, than regular data content or programming. With advertisement programming, this is because the audio and video quality of advertisements is typically given greater consideration in the television industry than that of regular television programs.

Heretofore, this has required either a dynamic, inefficient adjustment in the bandwidth provided by the broadcast system operator, in which case the additional bandwidth required is taken away from some other existing service thereby degrading its performance, constant use of a higher bandwidth for both regular data content and specialized data content, in which case excess bandwidth is wasted on the regular data content, or the constant use of the lower bandwidth acceptable for regular data content, in which case the quality of the specialized data content suffered.

US 5,412,416 discloses a distribution network for full motion video media, usually in the form of advertisements, allowing video programs to be transmitted from a distribution centre to a multitude of receiving sites dispersed over a wide geographic area. Programs are transmitted via satellite and are receivable via antennae at the receiving sites. Television monitors located at selected points in the receiving sites display the programs to an audience. Video program are customized for particular target audiences or markets, such that the series of programs played in one receiving site could be different from that played in another. The distribution network provides automatic insertion of custom, store-specific video segments into a general, network-wide video program without the need for operational involvement of personnel at the receiving site through the use of control data encoded into the video signal at the distribution centre. An insertion control unit at each receiving site reads the control data and switches a receiver among channels carrying the network-wide program and market specific segments according to the control data.

US 5,155,591 discloses a cable television system wherein different commercial messages are broadcast to different demographically targeted audiences. A first television channel contains television programs and periodic commercial messages. A second television channel contains alternate commercial messages. Demographic characteristics of a viewer are identified, and commercial messages are selectively provided from the first or second channel, depending upon the viewer's demographic characteristics. Demographic data can be input by a viewer via a remote control, downloaded to a subscriber's converter from a remote head end, or programmed into the converter at installation. Prioritization of the demographic characteristics of a plurality of television viewers watching a program together enables commercials to be targeted to the viewer having highest priority.

### SUMMARY OF THE INVENTION

The present invention provides a system and method for broadcast system operators to target specialized data, for example, advertisement programming, to pre-selected audiences as defined in the independent claims. Broadcast system operators are provided with a system and method to satisfy demands for higher bandwidth or higher data rates while transmitting specialized data, in an efficient, cost-effective manner.

In accordance with an illustrative embodiment of the invention, user classifications are obtained for a plurality of data users. These user classifications are based on a predetermined set of criteria indicative of the preferences of the data users. The classifications for a predetermined data content are also obtained. These classifications are based on a second predetermined set of criteria, which may, but need not be, the same as the first set of criteria, indicative of the preferences of the users to which the predetermined data content is directed.

Once the user and predetermined data content classifications are obtained, the predetermined data content and the regular data content are broadcast to multiple user reception units over separate broadcasting services. The user reception units are configured to receive and present the data to the users. A means for indicating when the user reception units are to automatically switch from the presentation of said regular data content to the presentation of said predetermined data content, and vice versa, is also broadcasted to the plurality of user reception units. The means is configured in accordance with the user classifications and the content classifications.

In another illustrative embodiment of the invention, user classifications are not obtained for the plurality of users before broadcast of the predetermined data content and the regular data content over separate broadcasting services.

In this embodiment of the invention, the means for indicating when the user reception units are to automatically switch from the presentation of the data content to the presentation of the predetermined data content, and vice versa, is configured only in accordance with the content classifications.

In yet another illustrative embodiment of the invention, neither user classifications nor content classifications are obtained prior to broadcast of the predetermined data content and the regular data content over separate broadcasting services. In this embodiment of the invention, the means for indicating when the user reception units are to automatically switch from the presentation of the data content to the presentation of the predetermined data content, and vice versa, is configured by the system operator in accordance with predetermined criteria, including for example, the demands of the creator of the predetermined data content.

In yet another illustrative embodiment of the invention, viewer classifications are obtained for a plurality of television viewers. These viewer classifications are based on a predetermined set of criteria indicative of the viewing preferences of the viewers, and may illustratively include the age, gender, and preferred language of the viewer. The classifications for a predetermined programming content, such as advertising, are also obtained. These classifications are also based on the predetermined set of criteria indicative of viewing preferences, and generally indicate the viewer classifications of the television viewers to which said advertising content is directed.

Once the viewer and programming content classifications are obtained, the predetermined programming content, such as advertising, and the regular programming television content are transmitted to multiple television viewer reception units over separate transmission services. A novel mapping table is also transmitted to the viewer reception units. The mapping table indicates when the individual reception units are to automatically tune to the predetermined programming content, such as advertising, from the regular programming television content. The mapping table is configured in accordance with the viewer classifications and the predetermined programming content classifications so that each viewer views the predetermined programming content that substantially matches that viewer's classifications.

### BRIEF DESCRIPTION OF THE DRAWINGS

The features and advantages of the present invention will be better understood by reference to the following detailed description, which should be read in conjunction with the accompanying drawings in which:
FIG. 1 depicts a viewing environment for one illustrative data broadcasting system, a satellite television system;
FIG. 2 depicts the use of a separate advertising channel to provide advertising content to viewers of regularly scheduled programming on regular television programming channels; and
FIG. 3 depicts an exemplary Digital Video Broadcasting syntax for establishing an advertisement map table.

### DETAILED DESCRIPTION OF THE INVENTION

The following embodiments of the present invention will be described in the context of a satellite television broadcasting system, and more particularly, in the context of broadcasting advertising to satellite television viewers.

The following embodiments of the present invention will also be described in the context of the Digital Video Broadcasting ("DVB") standards. However, those skilled in the art will recognize that the disclosed methods and structures are readily adaptable for broader application. Indeed, it will be recognized that the novel methods and structures disclosed herein may be easily adapted for use with any type of data transmission over any type of data broadcasting system to any type of user reception unit.

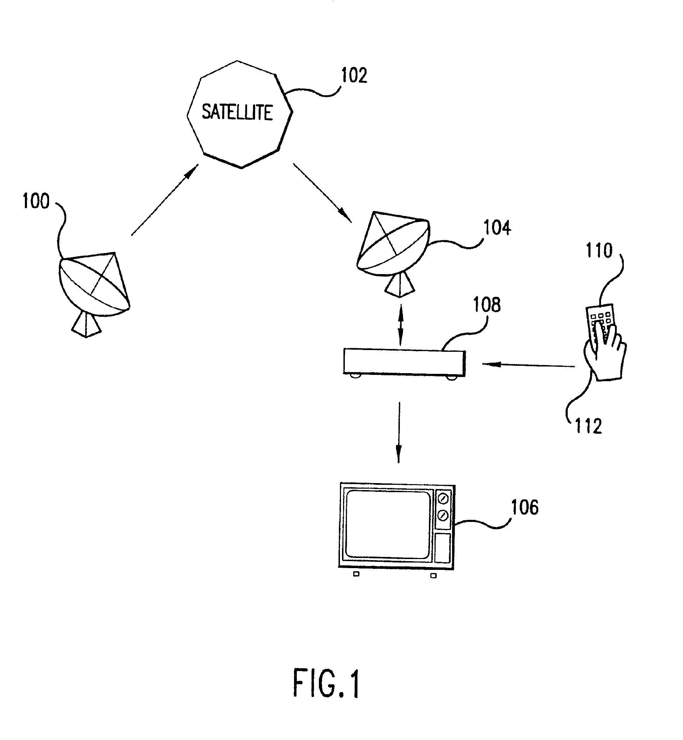

FIG. 1 discloses a viewing environment for an illustrative data broadcasting system, and in particular, a satellite television broadcasting system. As shown in FIG.

1, a viewing environment for a satellite television broadcasting system typically incorporates a satellite television system operator 100, a satellite 102, a satellite receiver 104, a television 106, a satellite interface unit 108, a satellite interface unit remote control 110, and a viewer 112. Satellite interface units 108 are known in the art, and are generally found in the form of a television set top unit. One illustrative example of such a set-top unit is the Irdeto Digital Video Broadcast Satellite Integrated Receiver/Decoder, manufactured by Hyundai Electronics America. Satellite interface unit 108 is connected to, and between, television 106 and satellite receiver 104.

Satellite receiver 104 receives television and other signals from a remote satellite 102 and forwards these signals to interface unit 108. Interface unit 108 then displays the signals, often in the form of television programming, on television 106.

Interface unit 108 may also perform additional functions, such as decompression or decoding/encoding of the television programming, and may include one or more removable and/or non-removable electronic storage means. Interface unit 108 also includes a means for accepting viewer commands, such as to change television channels, from interface unit remote control 110. However, remote control 110 is merely one means by which a viewer 112 may input commands to interface unit 108. For example, viewer 112 may input commands directly into the set-top unit 108. Additionally, set-top unit 108 may include a means for displaying an Electronic Program Guide ("EPG"), said EPGs being well known in the art. If such an EPG is provided, the viewer may input commands into the set-top unit utilizing the EPG.

In accordance with an illustrative embodiment of the invention, a system and method is provided for targeting specialized programming to pre-selected viewers utilizing the viewing environment disclosed in FIG. 1. However, as mentioned, although this illustrative embodiment will be described in the context of advertising as the specialized programming to be broadcast, those skilled in the art will recognize that the specialized programming content described herein could be any form of information or data and not exceed the scope of the invention. Indeed, the specialized programming content illustratively could be information from particular internet websites, specific regular television programming, or a particular specialized subset of regular television programming, such as news in a particular language.

Moreover, although this illustrative embodiment will be described in the context of a satellite television system, the data broadcasting system need not be a satellite and the user interface unit need not be a television set-top unit and television. Thus, for example, the novel method and apparatus may be utilized in the context of any number of different broadcasting systems, such as cable systems, MMDS systems, or a computer networks, and in the context of any number of different user interface units, such as computer workstations, computer terminals, or personal computers.

Turning now to the illustrative embodiment disclosed in FIG. 1, satellite television system operator 100 first classifies, or obtains the classification of, each viewer in the viewing population based on, for example, their viewing preferences. Possible preference criteria illustratively include, among others, when the viewer most often watches television; age, gender, preferred language, or economic class of the viewer; viewer lifestyle (e.g., particular leisure activities, hobbies, or travel); or regular or preferred programming type of the viewer (e.g., sports, movies, or children's shows).

Yet another possible criteria is geographical location of the viewer. However, this method of classification is especially useful in satellite systems-when targeting large geographical areas or regions, as the targeting of numerous local geographic areas with satellite transmissions would involve a cost penalty in the form of increased satellite bandwidth requirements.

In this embodiment of the invention, one means of obtaining viewers' preferences is through a procedure whereby system operator 100 programs interface unit 108 to present, and interface unit 108 presents, choices among pre-determined selection criteria to viewer 112. Viewer 112 selects those criteria, using remote control 110, that are most desired or most applicable. Once viewer 112 has selected the desired criteria, this information may be stored in interface unit 108 for later use, or alternatively, may be forwarded, for by example, by modem to satellite television system operator 100. Of course, not every viewer 112 may choose to enter selection criteria. Thus, for these viewers, default values may be assigned by operator 100.

Another acceptable method of obtaining a viewer's preferences is to monitor that viewer's viewing activities and determine the viewer's preferred categories of programming. Such a method is disclosed in EP-A-1 013 082, which is incorporated herein by reference.

As mentioned, the viewer's preferences may be stored in interface unit 108. More particularly, the preferences may be stored in well known non-volatile memories in interface unit 108, including, among others, EPROMs, EEPROMs, flash memories, or smart cards. Of course, interface unit 108 is capable of storing preferences for more than one viewer.

Accordingly, when a particular viewer is viewing a satellite television broadcast, the specialized programming content, such as advertising, can be tailored for that individual viewer. One skilled in the art will understand that the above-described procedure may also include a means for allowing viewers to change or remove their preferences.

Once the total viewing population has been classified based on, for example, their viewing preferences, the specialized programming content must likewise be classified.

This classification is effected with the audience in mind that the creator of the programming content, such as an advertiser, is targeting, and may be performed either by the advertisers, who then forward the classifications on to operator 100, or by operator 100, based on, for example, the advertiser's input or desires. Possible classification criteria for the specialized programming content illustratively include the same criteria used to classify viewers' preferences. For example, certain advertisements may be designed for viewing in conjunction with prime-time news programs. Others may be targeted at the elderly, viewers that speak a particular language, or viewers of a particular economic class. However, it will be recognized that the criteria for classifying the viewers and the specialized programming content need not be the same criteria, in which case, the differing criteria for each group would simply need to be matched or mapped to the corresponding criteria for the other group.

Such classification of for example, advertising content, is well known in the art and is done to maximize the impact of an advertisement. However, as described herein, one aspect of the present invention is the enablement of finer granularity in mapping specialized programming content to the appropriate audience, due to the corresponding classification of viewers' preferences as well as the specialized programming content, thereby reaching the viewers with the most interest in that programming content.

In accordance with the invention, once the viewing population has been classified, and the specialized programming content likewise classified, regularly scheduled television content, such as television shows, sporting events, and movies, is separated from the specialized programming content for transmission. More particularly, the specialized programming content is transmitted to viewer satellite receivers 104 on a separate satellite transmission channel than the regularly scheduled programming content (in this context, "channel" illustratively refers to a unique digital service as defined within the Digital Video
Broadcasting (DVB) standards published by the European Telecommunication Standards Institute ("ETSI")). Then, at prescheduled times, and as described in more detail below, selected interface units 108 can advantageously tune to the specialized programming channel to enable granular reception of specialized programming content.

This novel use of a separate specialized channel is advantageous for a variety of reasons. For example, by devoting a separate channel solely to specialized programming content, such as advertising, satellite system operator 100 can allocate a higher bandwidth to this channel to ensure higher video quality for all such specialized programming, and avoid the problems associated with the dynamic reallocation of bandwidth whenever such material is to be aired.

Moreover, multiple interface units 108, not all tuned to the same channel, may be simultaneously tuned to the specialized programming channel. This capability leads to obvious efficiencies in bandwidth usage, as, for example, the same advertisement need not be broadcast over multiple channels. Indeed, one skilled in the art will recognize that the broadcast bandwidth that is freed up due to this efficient use of a dedicated advertisement channel may be utilized by satellite system operator 100 to generate additional revenues by transmission of opportunistic data over the multiple unused channels. For example, the bandwidth can be used to deliver to viewers time insensitive data such as electronic mail or software. The freed up bandwidth can also be provided by satellite system operator 100 to select customers so that these customers may transfer data to selected audiences.

### System Synchronization

Implementation of this novel system and method in accordance with the invention requires synchronization at the operator system level as well as some added sophistication in content scheduling. For example, the operator may, as previously mentioned, categorize, or obtain the categorization of, all specialized programming content based on the target audience. This task is made even more difficult by the fact that the specialized programming may belong to more than one category (one such example would be an advertisement that targets German speaking children at prime time). The operator may, as also previously mentioned, categorize the viewing audience.

In addition to categorizing the viewing audience and the specialized programming content, a time for delivery of each specialized program must be determined and the specialized program must be scheduled for transmission on the appropriate dedicated channel or channels at the determined time. When the specialized program is categorized by desired time of delivery, scheduling will be easily determined. However, when a specialized program has been categorized based on other criteria, such as language or lifestyle, the determination by operator 100 is more difficult.

Once a specialized program has been scheduled for delivery to a particular category or group of viewers, these viewers' interface units 108 must be instructed to automatically tune to the appropriate specialized channel at the correct time. This involves transmitting service information and program specific information to the interface unit 108 at pre-scheduled times. One skilled in the art will understand that service and program specific information are defined in the DVB standards, and provide schedule and service information relating to the actual program information being transmitted. For example, information necessary for interface unit 108 to display an EPG can be transmitted via service and program specific information.

The information provided by the service information and program specific information is necessary in order to allow interface unit 108 to correctly change to and from the dedicated specialized programming channel. In addition, mapping tables, containing information mapping viewer preferences against the specialized programming channel or channels, and the time and duration of specialized programming breaks, must be supplied to the interface units.

These novel mapping tables are described in detail below.

In addition, the transmission of regularly scheduled television programming on regular programming channels must be synchronized to stop and start in correlation with the transmission of scheduled specialized programming on the specialized programming channel, and any transmission of opportunistic data over the regular television programming channels must be synchronized to start and stop with the transmission of the specialized programming.

Finally, one skilled in the art will appreciate that interface units 108 must be equipped with the appropriate hardware and software to receive, interpret, and act on the information contained in the broadcasted service information, program specific information, and mapping tables.

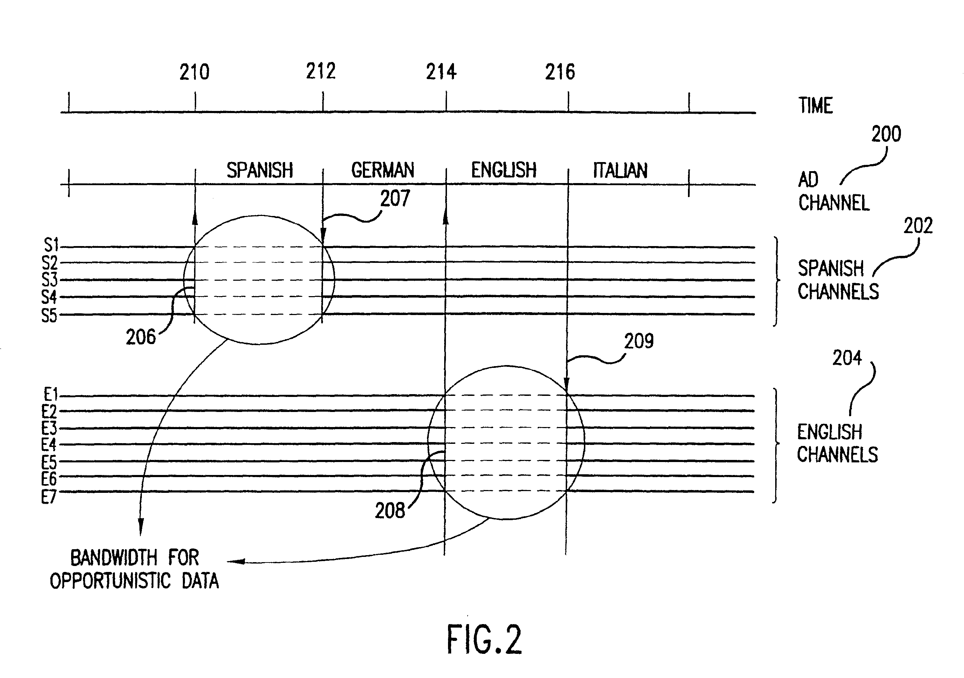

FIG. 2 illustratively depicts the synchronization of advertising and regularly scheduled television programming in accordance with the invention. As shown in FIG. 2, advertising channel 200 delivers advertisements that have been categorized according to language. Regularly scheduled television programming is also delivered over multiple channels, illustratively grouped according to language.

Spanish language channels S1 through S5 (collectively the Spanish language channels 202) carry programming in the Spanish language, while English language channels E1 through E7 (collectively the English language channels 204) deliver programming in the English language. Note, however, that these channels do not have to be sequentially numbered, nor do they have to be physically co-located in the network.

Grouping, for the purpose of carrying out the novel system and method disclosed herein, may instead be abstracted to a higher layer.

At a first pre-scheduled time 210, the interface units for viewers tuned to Spanish channels 202 automatically tune to advertising channel 200. The collective tuning of all interface units tuned to Spanish channels 202 to advertising channel 200 is depicted in FIG. 2 by arrow 206. At a second pre-scheduled time 212, the same interface units automatically tune back to the respective channel of Spanish channels 202 that had been tuned to before first prescheduled time 210, and resume decoding of the interrupted programming. This collective tuning of the interface units back to the appropriate Spanish channels of Spanish channels 202 is depicted in FIG. 2 by arrow 207. At a third prescheduled time 214, the interface units for viewers tuned to
English channels 204 automatically tune to advertising channel 200. The collective tuning of all interface units tuned to English channels 204 to advertising channel 200 is depicted in FIG. 2 by arrow 208. At a fourth pre-scheduled time 216, the same interface units automatically tune back to the respective channel of English channels 204 that had been tuned to before third pre-scheduled time 214. This collective tuning of the interface units back to the appropriate English channels of English channels 204 is depicted in FIG. 2 by arrow 209. During the time intervals from 210 to 212 and 214 to 216, opportunistic data may be provided over the unused bandwidth, depicted by dashed lines in FIG. 2, of Spanish channels 202 and English channels 204, respectively.

As mentioned, the tuning described herein is preferably performed internally by the interface units. The viewers need not change channels, nor do the viewers even know the channel changes are occurring. As far as the viewers are concerned, both the regularly scheduled programming content and the specialized programming content is being aired in their language of choice on the channel to which they have personally tuned.

Once a television viewer instructs interface unit 108, illustratively by remote control 110, to tune to a different programming channel, the interface unit will first automatically determine, via the mapping table described herein, whether that channel is broadcasting a regularly scheduled television event or has instead been mapped out to an specialized programming channel. Based upon this determination, interface unit 108 will tune to the appropriate channel. If indeed, the new channel is mapped to a specialized programming channel at that particular time, interface unit 108 will determine the parameters of the regular channel so that it can tune back to that channel at the end of the specialized programming break.

For proper tuning in accordance with the invention, each interface unit should always be aware of the wall clock or real time, such as the local time or Greenwich Mean Time.

However, one skilled in the art will recognize that this is easily implemented using the DVB-defined Time and Date Tables (TDT) which carry snapshots of Universal time. Under the current DVB standards, these snapshots are transmitted to interface units at least once every 30 seconds and al-low interface units to determine and maintain their correct local time from the universal time clock. Of course, one skilled in the art will also understand that other methods of allowing the interface units to identify the proper time at which to tune to the advertisement channels, such as electronic prompts from system operator 100, may be utilized.

### The Mapping Tables

In accordance with the invention, system operator 100 will broadcast mapping tables to each viewer interface unit 108 via satellite 102. These mapping tables map specialized data content to be transmitted on particular channels to particular viewers, based on viewer and advertisement classifications. In one illustrative embodiment, these mapping tables comprise advertisement mapping tables that indicate to appropriate viewer interface units 108 to automatically tune to the appropriate advertisement channels at pre-scheduled times. The tables are received and stored by interface units 108 preferably in non-voldtile memory, and should span an appreciable length of time, illustratively several hours, to reduce the number of times said tables need be transmitted. However, the tables must be transmitted with sufficient regularity to quickly provide the necessary information to interface units that become operational in between advertisement map table transmissions.

In accordance with this illustrative embodiment of the invention, the information in the advertisement mapping tables may first be sorted by viewer preference categories (e.g., age or programming category). Within each viewer preference category, information may sorted by, for example, language preference (e.g., Spanish or English). Within each language preference, information may be sorted by channel.

For each channel, the advertisement map table will contain several hours of advertisement information consisting of an identification of each adv

One skilled in the art will also recognize that the mapping tables need not be configured in accordance with user classifications. Thus, in another illustrative embodiment of the invention, user classifications are not obtained for the plurality of users before broadcast of the specialized data content, such as advertising, and the regular data content, such as regularly scheduled programming, over separate broadcasting services. In this embodiment of the invention, the mapping tables are configured only in accordance with the specialized data content classifications. Thus, for example, the mapping tables would indicate that if an advertisement is classified and thus scheduled for prime time television in
San Jose, California, all interface units in San Jose, California, regardless of particular viewer preferences, would be instructed by the mapping tables to tune to the appropriate advertising channel at the appropriate time.

In yet another illustrative embodiment of the invention, neither user classifications nor specialized content classifications are obtained prior to broadcast of the specialized data content and the regular data content over separate broadcasting services. In this embodiment of the invention, the mapping tables are configured by the system operator in accordance with other criteria, including for example, the demands of the creator of the specialized data content or the availability of time slots for transmitting specialized data content. Thus, for example, if the system operator has specialized data content that is to be transmitted over particular channels, and the system operator has particular time slots available for such transmissions, the system operator can configure the mapping tables to instruct certain interface units to switch to the specialized data content at the available times.

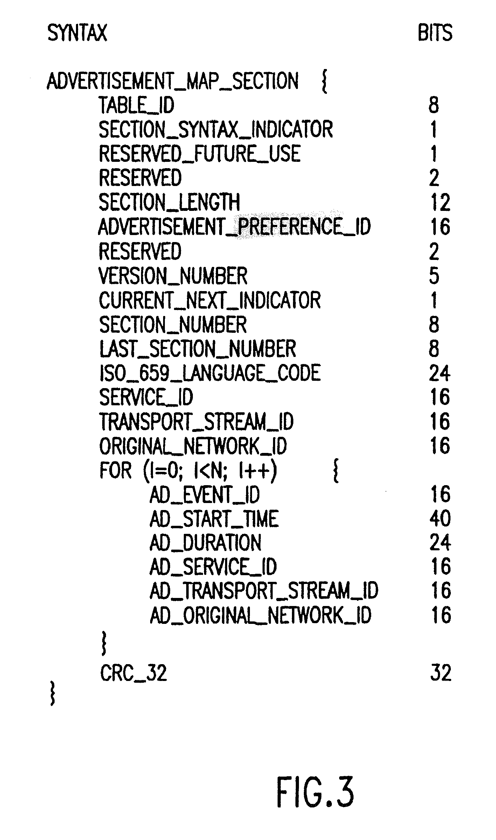

FIG. 3 provides an exemplary embodiment of an advertisement map table constructed using primarily DVB syntax. As shown in FIG. 3, the advertisement map table is comprised of a number of fields, each of which is a certain number of bits in length. The number of bits for each field shown in FIG. 3 is merely illustrative, and one skilled in the art will understand that the number of bits for each particular field may be varied.

While several fields of the advertisement map table shown in FIG. 3 are not currently part of the DVB standard, several of the fields are currently part of the DVB standard and may be used to construct the advertisement map table.

Moreover, one skilled in the art will understand that those fields that are not currently part of the DVB standard are similar to and derived from current DVB defined fields. What follows is a listing and description of some of the fields in the advertisement map table according to the invention. Use of fields disclosed in FIG. 3, but not listed below, is well known in the art and need not be further described herein.
**table_id:** Specific values assigned within the DVB standard cannot be used. Therefore, only "user-defined" values under the DVB standards may be used.
**advertisement_reference_id:** Identifies the advertisement preference(s) for each interface unit. A unique value is utilized to indicate no preference.
**IS0_659_language code:** Identifies the language of the advertisement content.
**service_id:** Differentiates the service for which the advertisement map is being defined from any other services within a transport stream.
**transport stream id:** differentiates the service for which the advertisement map is being defined from any other multiplex in the delivery system; original_network_id: Identifies the network_id of the originating delivery system of the transport stream.

The following described fields of the advertisement map table in FIG. 3 are not part of the present DVB standard, but may be easily implemented using the same:
**ad_event_id:** Identifies the advertisement event, which will be unique for a given ad service id (see below).
**ad_start_time:** Start time of the ad_event in Universal Time, Co-ordinated ("UTC"), and Modified Julian Date (MJD"), each of which is described in the DVB standard.
**ad_duration:** Duration of the ad_event in hours, minutes, and seconds as described in the EIT section of the DVB standard.
**ad_service_id:** Differentiates the advertisement service from any other service within the transport stream that carries the advertisement content.
**ad_transport_id:** Differentiates the advertisement transport_stream, about which the advertisement table provides information, from other multiplex in the delivery system.
**ad_original_network_id:** Identifies the network_id of the originating delivery system carrying the advertisement service. Every interface unit receives the above-described advertisement map table, but may be configured to store only the part of the table that corresponds to its stored advertisement preference categories and language preferences.

For interface units that do not have viewer-chosen preferences, default preferences may be applied. Thus, for example, an interface unit that has the Italian language set as its preference, need not store the portions of the advertisement map table that does not describe the advertisement mapping for the Italian language.

As described herein, once the advertisement map table is made available to the interface units, the interface units will have the ability to automatically keep track of the times at which the DVB service channel parameters should be changed to automatically present advertisements from the advertisement channel to the viewer, and when the parameters should be restored to their original values.

Various embodiments of the invention have been described. The descriptions are offered by way of illustration, not limitation. Thus, as explained herein, it will be apparent to those skilled in the art that modifications may be made to the invention as described without departing from the scope of the claims set out below.

Aspects of the invention include:
1. A method for providing data to a plurality of users with user reception units over a data broadcasting system, comprising the steps of:
   obtaining user classifications for said plurality of users, said user classifications based on a first predetermined set of criteria indicative of the preferences of said users;
   obtaining content classifications for a predetermined data content, said content classifications based on a second predetermined set of criteria indicative of the preferences of said users to which said predetermined data content is directed; broadcasting said predetermined data content to said plurality of user reception units by a first broadcasting service, said user reception units configured to receive data and present data to said users;
   broadcasting regular data content to said plurality of user reception units by a second broadcasting service; and
   broadcasting a means to said plurality of user reception units for indicating when said user reception units are to automatically switch from the presentation of said regular data content to the presentation of said predetermined data content, said means configured in accordance with said user classifications and said content classifications.
2. The method of aspect 1, wherein said data broadcasting system comprises a satellite broadcasting system.
3. The method of aspect 1, wherein said data broadcasting system comprises a computer network.
4. The method of aspect 1, wherein said user reception unit comprises a television set-top unit.
5. The method of aspect 4, wherein said first and second transmission services comprise television channels.
6. The method of aspect 5, wherein said predetermined data content comprises television advertising and said regular data content comprises regularly scheduled television programming.
7. The method of aspect 1, wherein said user reception unit comprises a personal computer.
8. The method of aspect 1, wherein said means for indicating when said reception units are to automatically switch presentations comprises a mapping means, and wherein said mapping means further indicates when said reception units are to automatically switch back to the presentation of regular data content from the presentation of said predetermined data content.
9. The method of aspect 8, wherein said mapping means indicates to a first subset of said user reception units to automatically switch from the presentation of said regular data content to the presentation of said predetermined data content at a first predetermined time, and indicates to a second subset of said user reception units to automatically switch from the presentation of said regular data content to the presentation of said predetermined data content at a second predetermined time.
10. The method of aspect 1, further comprising the step of broadcasting opportunistic data over said second transmission service when said user reception units are presenting said predetermined data content.
11. The method of aspect 1, wherein said first predetermined set of criteria includes user age and preferred language.
12. The method of aspect 1, wherein said second predetermined set of criteria includes age of desired user and regular data content type with which said predetermined data content is to be temporally matched.
13. The method of aspect 1, wherein said first predetermined set of criteria is substantially the same as said second predetermined set of criteria.
14. A system for providing data to a plurality of users with user reception units over a data broadcasting system, comprising:
   means for obtaining user classifications for said plurality of users, said user classifications based on a first predetermined set of criteria indicative of the preferences of said users; means for obtaining content classifications for a predetermined data content, said content classifications based on a second predetermined set of criteria indicative of the preferences of said users to which said predetermined data content is directed; means for broadcasting said predetermined data content to said plurality of user reception units by a first broadcasting service, said user reception units configured to receive data and present data to said users;
   means for broadcasting regular data content to said plurality of user reception units by a second broadcasting service; and
   means for broadcasting a means to said plurality of user reception units for indicating when said user reception units are to automatically switch from the presentation of said regular data content to the presentation of said predetermined data content, said means configured in accordance with said user classifications and said content classifications.
15. The system of aspect 14, wherein said data broadcasting system comprises a satellite broadcasting system.
16. The system of aspect 14, wherein said data broadcasting system comprises a computer network.
17. The system of aspect 14, wherein said user reception unit comprises a television set-top unit.
18. The system of aspect 17, wherein said predetermined data content comprises television advertising and said regular data content comprises regularly scheduled television programming.
19. The system of aspect 14, wherein said user reception unit comprises a personal computer.
20. The system of aspect 14, wherein said means for indicating when said reception units are to automatically switch presentations comprises a mapping means, and wherein said mapping means further indicates when said reception units are to automatically switch back to the presentation of regular data content from the presentation of said predetermined data content.
21. The system of aspect 20, wherein said mapping means indicates to a first subset of said user reception units to automatically switch from the presentation of said regular data content to the presentation of said predetermined data content at a first predetermined time, and indicates to a second subset of said user reception units to automatically switch from the presentation of said regular data content to the presentation of said predetermined data content at a second predetermined time.
22. The system of aspect 14, further comprising a means for broadcasting opportunistic data over said second transmission service when said user reception units are presenting said predetermined data content.
23. The system of aspect 14, wherein said first predetermined set of criteria includes user age and geographic location.
24. The system of aspect 14, wherein said second predetermined set of criteria includes age of desired user and regular data content type with which said predetermined data content is to be temporally matched.
25. The system of aspect 14, wherein said first predetermined set of criteria is substantially the same as said second predetermined set of criteria.
26. A method for providing television programming to a plurality of viewers with television set-top units over a satellite broadcasting system, comprising the steps of:
   obtaining viewer classifications for said plurality of television viewers, said classifications based on a first predetermined set of criteria indicative of the preferences of said viewers;
   obtaining content classifications for a predetermined programming content, said classifications based on a second predetermined set of criteria indicative of the preferences of said viewers to which said predetermined programming content is directed;
   broadcasting said predetermined programming content to said plurality of television viewer set-top units by a first satellite transmission service;
   broadcasting regularly scheduled programming television content to said plurality of viewer set-top units by a second satellite transmission service; and
   broadcasting a mapping means to said plurality of viewer set-top units for indicating when said set-top units are to automatically tune to said predetermined programming content from said regularly scheduled programming television content and
   when said set-top units are to automatically tune back to said regularly scheduled programming television content from said predetermined programming content, said mapping means configured in accordance with said viewer classifications and said content classifications.
27. The method of aspect 26, wherein said predetermined programming content comprises television advertising.
28. The method of aspect 26, further comprising the step of broadcasting opportunistic data over said second transmission service when said set-top units are tuned to said predetermined programming content.
29. The method of aspect 26, wherein said first predetermined set of criteria is substantially the same as said second predetermined set of criteria.
30. An apparatus for providing television programming to a plurality of viewers with television set-top units over a satellite broadcasting system, comprising:
   means for obtaining viewer classifications for said plurality of television viewers, said classifications based on a first predetermined set of criteria indicative of the preferences of said viewers;
   means for obtaining content classifications for a predetermined programming content, said classifications based on a second predetermined set of criteria indicative of the preferences of said viewers to which said predetermined programming content is directed;
   means for broadcasting said predetermined programming content to said plurality of television viewer set-top units by a first satellite transmission service;
   means for broadcasting regularly scheduled programming television content to said plurality of viewer set-top units by a second satellite transmission service; and
   means for broadcasting a mapping means to said plurality of viewer set-top units for indicating when said set-top units are to automatically tune to said predetermined programming content from said regularly scheduled programming television content and
   when said set-top units are to automatically tune back to said regularly scheduled programming television content from said predetermined programming content, said mapping means configured in accordance with said viewer classifications and said content classifications.
31. The apparatus of aspect 30, wherein said predetermined programming content comprises television advertising.
32. The apparatus of aspect 30, further comprising a means for broadcasting opportunistic data over said second transmission service when said set-top units are tuned to said predetermined programming content.
33. The apparatus of aspect 3Q, wherein said first predetermined set of criteria is substantially the same as said second predetermined set of criteria.
34. A method for providing data to a plurality of users with user reception units over a data broadcasting system, comprising the steps of:
   obtaining content classifications for a predetermined data content, said content classifications based on a predetermined set of criteria indicative of the preferences of said users to which said predetermined data content is directed;
   broadcasting said predetermined data content to said plurality of user reception units by a first broadcasting service, said user reception units configured to receive data and present data to said users;
   broadcasting regular data content to said plurality of user reception units by a second broadcasting service; and
   broadcasting a means to said plurality of user reception units for indicating when said user reception units are to automatically switch from the presentation of said regular data content to the presentation of said predetermined data content and when said user reception units are to automatically switch back to said regular data content from said predetermined data content, said means configured in accordance with said content classifications.
35. The method of aspect 34, further comprising the step of broadcasting opportunistic data over said second broadcasting service when said reception units are switched to said predetermined data content.
36. The method of aspect 34, wherein said data broadcasting system comprises a satellite broadcasting system.
37. The method of aspect 34, wherein said user reception unit comprises a television set-top unit.
38. The method of aspect 34, wherein said predetermined data content comprises television advertising and said regular data content comprises regularly scheduled television programming.
39. The method of aspect 34, wherein said indicating means indicates to a first subset of said user reception units to automatically switch from the presentation of said regular data content to the presentation of said predetermined data content at a first predetermined time, and indicates to a second subset of said user reception units to automatically switch from the presentation of said regular data content to the presentation of said predetermined data content at a second predetermined time.
40. A method for providing specialized data to a plurality of users with user reception units over a data broadcasting system, comprising the steps of:
   broadcasting a predetermined data content to said plurality of user reception units by a first broadcasting service, said user reception units configured to receive data and present data to said users;
   broadcasting regular data content to said plurality of user reception units by a plurality of broadcasting services, said plurality of broadcasting services being separate and distinct from said first broadcasting service; and
   broadcasting a means to said plurality of user reception units for indicating when said user reception units are to automatically switch from the presentation of said regular data content from said plurality of broadcasting services, to the presentation of said predetermined data content from said first broadcasting service, and when said user reception units are to automatically switch back to the presentation of said regular data content from said plurality of broadcasting services from said predetermined data content.
41. The method of aspect 40, further comprising the step of broadcasting opportunistic data over said plurality of broadcasting services when said reception units are switched to said predetermined data content.
42. The method of aspect 40, wherein said data broadcasting system comprises a satellite broadcasting system.
43. The method of aspect 40, wherein said predetermined data content comprises television advertising and said regular data content comprises regularly scheduled television programming.
44. The method of aspect 40, wherein said indicating means indicates to a first subset of said user reception units to automatically switch from the presentation of said regular data content to the presentation of said predetermined data content at a first predetermined time, and indicates to a second subset of said user reception units to automatically switch from the presentation of said regular data content to the presentation of said predetermined data content at a second predetermined time.

## Claims

1. A method for providing data to a plurality of users with user reception units (104, 106, 108) over a data broadcasting system (100, 102, 104), comprising the steps of:
broadcasting a predetermined data content to said plurality of user reception units by a first broadcasting service (200), said user reception units being configured to receive data and present data to said users, wherein said predetermined data content is categorized using content classifications, said content classifications being based on a predetermined set of criteria indicative of the preferences of said users to which said predetermined data content is directed;
broadcasting regular data content to said plurality of user reception units by at least a second broadcasting service (202, 204);
broadcasting a means to said plurality of user reception units for indicating when said user reception units are to automatically switch from the presentation of said regular data content to the presentation of said predetermined data content
**characterized in that**
said broadcast means for indicating contains information mapping said content classifications against said user preferences and/or default settings of said user reception units and is broadcast prior to broadcasting said predetermined data content for storage at said user reception unit.

2. Method according to claim 1, wherein said data broadcasting system comprises a satellite broadcasting system (100, 102, 104) or a computer network, wherein said user reception unit may comprise a television set-top unit (108) or a personal computer, wherein said first and second transmission services (200; 202, 204) may comprise television channels, wherein said predetermined data content comprises television advertising and said regular data content comprises regularly scheduled television programming.

3. Method according to claim 1 or 2, wherein said means for indicating when said reception units (104, 106, 108) are to automatically switch presentations comprises a mapping means, and wherein said mapping means further indicates when said reception units are to automatically switch back to the presentation of regular data content from the presentation of said predetermined data content.

4. Method of claim 3, wherein said mapping means indicates to a first subset of said user reception units (104, 106, 108) to automatically switch from the presentation of said regular data content to the presentation of said predetermined data content at a first predetermined time, and indicates to a second subset of said user reception units (104, 106, 108) to automatically switch from the presentation of said regular data content to the presentation of said predetermined data content at a second predetermined time.

5. Method of anyone of claims 1-4, further comprising the step of broadcasting opportunistic data over said second transmission service (202, 204) when said user reception units (104, 106, 108) are presenting said predetermined data content.

6. Method according to anyone of claims 1-5, wherein said data comprises television programming data, wherein said predetermined data content includes predetermined programming content, such as television advertising.

7. A method for receiving data at a user reception unit (104, 106, 108) over a data broadcasting system (100, 102, 104), said user reception unit being configured to receive data and present data to users, the method comprising the steps of:
receiving broadcast predetermined data content at said user reception unit via a first broadcasting service (200), said predetermined data content being categorized using content classifications;
receiving broadcast regular data content at said user reception unit via at least a second broadcasting service (202,204);
receiving a broadcast means at said user reception unit for indicating when said user reception unit is to automatically switch from the presentation of said regular data content to the presentation of said predetermined data content
**characterized in that**
said means for indicating contains information mapping said content classifications against user preferences and/or default settings of said user reception units, wherein said means for indicating are received prior to said predetermined data content to store said means at said user reception unit.

8. The method according to claim 7, further comprising the step of:
storing said user classifications at said user reception unit, wherein said received means for indicating are also configured in accordance with said user classifications.

9. A user reception unit configured for performing the steps of claim 7 or 8.

10. A system for providing data to a plurality of users with user reception units (104, 106, 108) over a data broadcasting system (100, 102, 104), comprising:
means for broadcasting a predetermined data content to said plurality of user reception units by a first broadcasting service (200), said user reception units being configured to receive data and present data to said users wherein said predetermined data content is categorized using content classifications, said content classifications being based on a predetermined set of criteria indicative of the preferences of said users to which said predetermined data content is directed;
means for broadcasting regular data content to said plurality of user reception units by a second broadcasting service (202, 204); and
means for broadcasting a means to said plurality of user reception units for indicating when said user reception units are to automatically switch from the presentation of said regular data content to the presentation of said predetermined data content
**characterized in that**
said system is configured for broadcasting said means for indicating prior to said predetermined data content, said_means containing information mapping said content classifications against said user preferences and/or default settings of said user reception units, and for storing said means at said reception units.

11. System of claim 10, wherein said data broadcasting system comprises a satellite broadcasting system (100, 102, 104) or a computer network, wherein said user reception unit may comprise a television set-top unit (108) or a personal computer, wherein said predetermined data content may comprise television advertising and said regular data content comprises regularly scheduled television programming.

12. System of claim 10 or 11, wherein said means for indicating when said reception units (104, 106, 108) are to automatically switch presentations comprises a mapping means, and wherein said mapping means further indicates when said reception units are to automatically switch back to the presentation of regular data content from the presentation of said predetermined data content.

13. System of claim 12, wherein said mapping means indicates to a first subset of said user reception units to automatically switch from the presentation of said regular data content to the presentation of said predetermined data content at a first predetermined time, and indicates to a second subset of said user reception units to automatically switch from the presentation of said regular data content to the presentation of said predetermined data content at a second predetermined time.

14. System according to anyone of claims 10-13, wherein said data comprises television programming data, wherein said predetermined data content includes predetermined programming content, such as television advertising.
